# FASCICULE DE BREVET EUROPEEN

(11) **EP 0 746 692 B1**
(45) Date de publication et mention de la délivrance du brevet: **24.04.2002**
(21) Numéro de dépôt: 95943275.8
(22) Date de dépôt: 22.12.1995
(51) Int. Cl.: F16B 2/24, F16L 3/04

(54) **DISPOSITIF FORMANT AGRAFE DE FIXATION D'UN ELEMENT A UNE PARTIE EN TOLE D'UN VEHICULE AUTOMOBILE ET PROCEDE DE REALISATION D'UN TEL DISPOSITIF**
KLEMMVORRICHTUNG ZUR BEFESTIGUNG EINES ELEMENTS AN EINEM BLECHTEIL EINES FAHRZEUGS, SOWIE HERSTELLUNGSVERFAHREN DAFÜR
CLIP DEVICE FOR FASTENING AN ELEMENT TO A SHEET METAL PORTION OF A MOTOR VEHICLE, AND METHOD FOR MAKING SAME

(30) Priorité: 27.12.1994 FR 9415720
(43) Date de publication de la demande: 11.12.1996
(73) Titulaire: AUTOMOBILES PEUGEOT, 75116 Paris (FR); AUTOMOBILES CITROEN, 92200 Neuilly-sur-Seine (FR)
(72) Inventeur: LE DU, Pierre, F-35310 Chavagne (FR)
(74) Mandataire: Bentz, Jean-Paul
(86) Numéro de dépôt international: FR9501731
(87) Numéro de publication internationale: WO9620349

(56) Documents cités:
- FR-A- 861 129
- US-A- 1 860 861
- US-A- 2 578 639
- US-A- 3 905 070
- US-A- 4 461 387

## Description

Dispositif formant agrafe de fixation d'un élément à une partie en tôle d'un véhicule automobile et procédé de réalisation d'un tel dispositif.

La présente invention concerne un dispositif formant agrafe de fixation d'un élément à une partie en tôle d'un véhicule automobile, ainsi qu'un procédé de réalisation d'un tel dispositif.

On connaît de tels dispositifs destinés à maintenir notamment des faisceaux électriques ou des éléments de tuyauterie à des parties en tôle de portes d'un véhicule automobile.

Ces dispositifs de fixation connus sont généralement constitués par des agrafes en matière plastique rapportées à la partie de support en tôle, mais qui sont agencées de telle sorte qu'elles nécessitent un temps de pose non négligeable. De plus, ces agrafes connues sont d'un coût variable suivant la complexité de l'élément à maintenir.

US-A-4 461 387 décrit l'utilisation d'un certain nombre de pinces disposées sur une colonne de support et destinées à suspendre respectivement des sachets de chips par pincement d'une partie de ceux-ci.

Cependant, ce document antérieur concerne un domaine technique différent de celui de l''invention.

La présente invention propose un dispositif formant agrafe éliminant les inconvénients ci-dessus des dispositifs connus.

A cet effet, le dispositif formant agrafe de l'invention comprend les caractéristiques énoncées dans la revendication 1.

De préférence, la languette comprend une partie évasée pour l'introduction de l'élément à maintenir, une partie de logement de l'élément et une partie concave entre les parties évasée et de logement pour maintenir l'élément dans la partie de logement.

Avantageusement, la languette a ses bords latéraux recourbés dans un sens opposé à la partie en tôle pour éviter d'endommager l'élément lors de son introduction dans la partie de logement correspondante de la languette.

L'invention propose également un procédé de réalisation du dispositif formant agrafe tel que précédemment défini et qui consiste à découper partiellement la tôle de la partie du véhicule, puis à emboutir et mettre en forme la languette prédécoupée en au moins une opération.

Le cas échéant, les étapes précitées de réalisation de la languette sont effectuées en une seule opération.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'une partie en tôle d'une porte d'un véhicule automobile montrant des emplacements de dispositifs formant agrafe selon l'invention;
- la figure 2 est une vue agrandie de la partie cerclée en II de la figure 1;
- la figure 3 est une vue en section suivant la ligne III-III de la figure 2;
- la figure 4 est une vue en perspective suivant la flèche IV de la figure 1;
- la figure 5 représente un ensemble formant poinçon d'emboutissage pouvant être utilisé pour réaliser une agrafe de l'invention; et
- la figure 6 est une vue de dessus suivant la flèche VI de la figure 5.

En se reportant aux figures, la référence 1 désigne la partie intérieure en tôle d'une porte arrière de véhicule automobile sur laquelle doivent être maintenus fixement au moins un élément 2 tel que par exemple un faisceau électrique ou un élément de tuyauterie.

L'élément 2 est fixé à la partie en tôle 1 par des agrafes qui, selon l'invention, sont constituées chacune par une languette 3 directement découpée dans la tôle de la partie 1 et mise à la forme souhaitée en fonction du type d'élément 2 à maintenir.

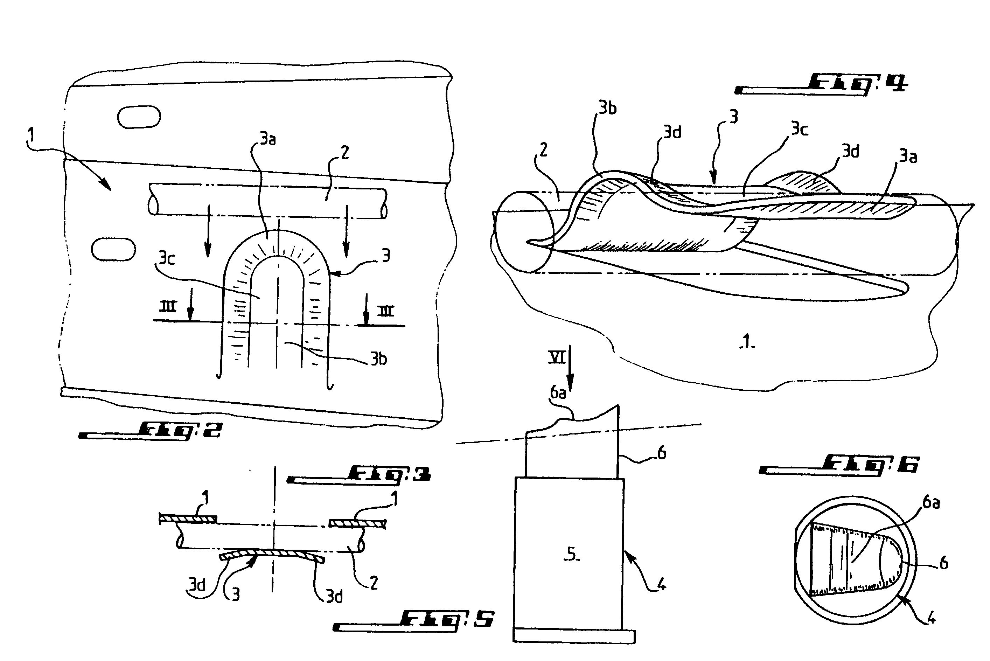

Comme représenté notamment en figure 4, la languette 3 comprend une partie d'extrémité libre évasée 3a permettant l'introduction de la partie correspondante de l'élément à fixer 2 entre la languette 3 et la paroi de tôle correspondante; une partie convexe 3b de logement de l'élément 2 et une partie concave 3c située entre les parties évasée 3a et de logement 3b pour maintenir l'élément 2 dans la partie de logement 3b.

Afin d'éviter d'endommager l'élément 2 par les bords latéraux 3d découpés de la languette 3, ces bords sont recourbés dans un sens opposé à la partie en tôle 1.

La mise en place d'un élément 2 dans chaque agrafe de maintien résulte déjà de la description qui précède et va être maintenant expliquée.

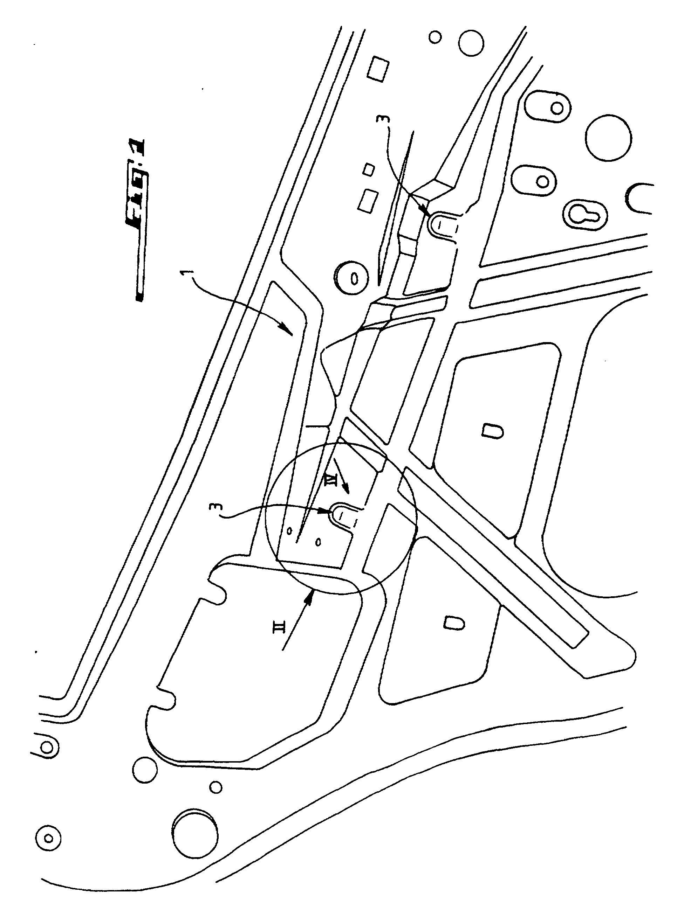

L'élément à maintenir 2 est positionné relativement à la languette 3 comme représenté en figure 2 et déplacé dans le sens indiqué par les flèches sur cette figure pour amener l'élément sous la partie évasée 3a de la languette 3. En appuyant suivant le sens de ces flèches, la languette 3 est écartée élastiquement de la partie en tôle 1 par la force exercée par l'élément 2 sur la partie concave 3c de la languette 3 et l'élément 2 est ensuite engagé dans la partie de maintien correspondante 3b de cette languette. La languette 3 revient sensiblement à sa position d'origine de sorte que la partie concave 3c maintienne l'élément 2 dans la partie de logement 3b.

Le procédé de réalisation de chaque agrafe de fixation est comme suit.

Aux emplacements appropriés de la partie en tôle 1 de la porte du véhicule, la tôle de cette partie est découpée partiellement de manière à former une languette 3, qui est ensuite emboutie à l'aide d'un outil d'emboutissage et mise en forme en une ou plusieurs opérations pour obtenir la configuration de languette décrite précédemment. Eventuellement, la réalisation complète d'une languette peut être effectuée en une seule opération d'emboutissage.

Les figures 5 et 6 représentent un poinçon d'emboutissage 4 permettant la mise en forme d'une languette 3 après avoir effectué une découpe simple de celle-ci à l'aide d'un outil approprié. Le poinçon 4 comprend une partie généralement cylindrique 5 prolongée par une partie terminale 6 comportant l'empreinte 6a de mise en forme d'une languette 3 telle que celle représentée en figure 4. La ligne en trait mixte symbolise la face numérisée ou face servant de référence de l'une des deux faces de la tôle, dans le cas présent la face tournée vers l'habitacle du véhicule, pour former la languette 3.

Le dispositif formant agrafe conforme à l'invention ne comporte pas de pièce rapportée, permet une rapidité de mise en place des éléments à fixer à la partie en tôle d'une porte de véhicule, est d'un coût nettement inférieur à celui de toute solution connue jusqu'à maintenant et autorise une meilleure fixation de ces éléments.

L'invention a été décrite comme s'appliquant à la fixation de faisceaux électriques sur une porte arrière de véhicule automobile mais il est bien évident qu'elle s'applique également à la fixation de tout autre élément (tuyauterie, etc.) sur une partie correspondante en tôle d'une porte avant ou toute autre partie d'un véhicule automobile.

## Revendications

1. Dispositif formant agrafe de fixation d'un élément allongé (2), ayant une section plus ou moins importante, tel qu'un faisceau électrique ou un élément de tuyauterie, à une partie en tôle (1) d'un véhicule automobile, **caractérisé en ce qu'**il comprend une languette (3) directement découpée dans la tôle de la partie (1) du véhicule et mise à la forme souhaitée en fonction de l'élément à maintenir (2).

2. Dispositif selon la revendication 1, **caractérisé en ce que** la languette (3) précitée comprend une partie évasée (3a) pour l'introduction de l'élément à maintenir (2), une partie (3b) de logement de l'élément (2) et une partie concave (3c) entre les parties évasée (3a) et de logement (3b) pour maintenir l'élément (2) dans la partie de logement (3b).

3. Dispositif selon la revendication 1 ou 2, **caractérisé en ce que** la languette (3) a ses bords latéraux (3d) recourbés dans un sens opposé à la partie en tôle (1) pour éviter d'endommager l'élément (2) lors de son introduction dans la partie de logement (3b) de la languette (3).

4. Procédé de réalisation du dispositif formant agrafe tel que défini dans l'une des revendications 1 à 3, **caractérisé en ce qu'**il consiste à découper partiellement la tôle de la partie (1) du véhicule, puis à emboutir et mettre en forme la languette prédécoupée (3) en au moins une opération.

5. Procédé selon la revendication 4, **caractérisé en ce que** les étapes précitées de réalisation de la languette sont effectuées en une seule opération.

## Claims

1. Clip device for fastening a lenghthened element (2), having a more or less important cross section, such as an electrical bundle or a pipe element, to a sheet metal portion (1) of a motor vehicle, **characterized in that** it comprises a tongue (3) which is directly cut into the sheet metal portion (1) of the vehicle and formed into the desired shape in function of the elemnt (2) to be maintained.

2. Device according to claim 1, **characterized in that** the pre-mentioned tongue (3) comprises a flared portion (3a) for introducing the element (2) to be maintained, a portion (3b) for receiving the element (2) and a concave portion (3c) between the flared (3a) and receiving (3b) portions for maintaining the element (2) in the receiving portion (3b).

3. Device according to claim 1 or 2, **characterized in that** the tongue (3) has lateral edges (3d) which are curved in an opposite direction to the sheet metal portion (1) so to avoid damaging the element (2) upon its introduction into the portion (3b) for receiving the tongue (3).

4. Method for making the clip device such as defined in one of claims 1 to 3, **characterized in** partially cutting the sheet metal portion of the vehicle (1), then stamping and shaping the pre-cut tongue (3) in at least one step.

5. Method according to claim 4, **characterized in that** the pre-mentioned steps for making the tongue are made in a single step.

## Patentansprüche

1. Klemmvorrichtung zum Befestigen eines länglichen Elements (2) mit einem mehr oder weniger großen Abschnitt, wie zum Beispiel einem elektrischen Kabelbaum oder einem Rohrelement, an einem Blechteil (1) eines Fahrzeugs, **dadurch gekennzeichnet, daß** es ein Anhängsel (3) umfaßt, das direkt aus dem Blech des Teils (1) des Fahrzeugs ausgeschnitten und in Abhängigkeit von dem festzuhaltenden Element (2) in die gewünschte Form gebracht wird.

2. Vorrichtung gemäß Anspruch 1, **dadurch gekennzeichnet, daß** das vorgenannte Anhängsel (3) einen konisch erweiterten Teil (3a) zur Einführung des festzuhaltenden Elements (2), einen Aufnahmeteil (3b) des Elements (2) und einen konkaven Teil (3c) zwischen den konisch erweiterten Teilen (3a) und der Aufnahme (3b) umfaßt, um das Element (2) im Aufnahmeteil (3b) festzuhalten.

3. Vorrichtung gemäß Anspruch 1 oder 2, **dadurch gekennzeichnet, daß** das Anhängsel (3) in einer dem Blechteil (1) gegenüberliegenden Richtung umgebogene laterale Ränder (3d) hat, um die Beschädigung des Elements (2) bei seiner Einführung in den Aufnahmeteil (3b) des Anhängsels (3) zu verhindern.

4. Herstellungsverfahren der Klemmvorrichtung gemäß Definition der Ansprüche 1 bis 3, **dadurch gekennzeichnet, daß** es darin besteht, das Blech des Teils (1) des Fahrzeugs teilweise auszuschneiden, und dann das zuvor zugeschnittene Anhängsel (3) in wenigstens einem Arbeitsgang auszubuchten und in Form zu bringen.

5. Verfahren gemäß Anspruch 4, **dadurch gekennzeichnet, daß** die vorgenannten Arbeitsschritte zur Realisierung des Anhängsels in einem einzigen Arbeitsgang erfolgen.
